# EUROPÄISCHE PATENTSCHRIFT

(11) **EP 2 077 913 B1**
(45) Veröffentlichungstag und Bekanntmachung des Hinweises auf die Patenterteilung: **02.01.2013**
(21) Anmeldenummer: 07820667.9
(22) Anmeldetag: 27.09.2007
(51) Int. Cl.: B01J 20/34, B01J 20/26, B01D 37/02, B01D 39/04, B01D 41/02, C12H 1/056

(54) **VERFAHREN ZUR REGENERIERUNG EINES FILTERHILFSMITTELS**
METHOD FOR REGENERATING AN AUXILIARY FILTERING AGENT
PROCÉDÉ DE RÉGÉNÉRATION D'UN ADJUVANT DE FILTRATION

(30) Priorität: 29.09.2006 EP 06121563; 25.05.2007 EP 07108932
(43) Veröffentlichungstag der Anmeldung: 15.07.2009
(73) Patentinhaber: BASF SE, 67056 Ludwigshafen (DE)
(72) Erfinder: MEFFERT, Helmut, 67273 Bobenheim am Berg (DE); PIEROBON, Marianna, 67063 Ludwigshafen (DE); PETSCH, Tobias, 55758 Mörschied (DE); BRODERSEN, Julia, 68163 Mannheim (DE); FEISE, Hermann Josef, 67259 Kleinniedesheim (DE); ERK, Ates, 76131 Karlsruhe (DE); KRESS, Jörg, 68239 Mannheim (DE); MAR, Ralf, 67691 Hochspeyer (DE); BAYER, Robert, 74889 Sinsheim (DE)
(86) Internationale Anmeldenummer: PCT/EP2007/060279
(87) Internationale Veröffentlichungsnummer: WO 2008/037777

(56) Entgegenhaltungen:
- EP-A- 1 338 321
- WO-A-02/32544
- WO-A-96/35497
- GB-A- 2 288 608
- US-A- 5 801 051
- US-A- 6 117 459

## Beschreibung

Die vorliegende Erfindung betrifft ein Verfahren zur Regenerierung eines Filterhilfsmittels, welches ein Co-Extrudat aus einem wasserunlöslichen Polyvinylpyrrolidon und einem thermoplastischen Polymer darstellt, durch Behandlung mit wässager Lauge und unter Einsatz von Enzymen. Weiterhin sind Regenerate offenbart, die mit Hilfe des erfindungsgemäßen Verfahrens erhalten werden, sowie deren Verwendung bei der Filtration von Bier.

Als Filterhilfsmittel werden Zusatzstoffe verstanden, die bei Fest-Flüssig-Trennprozessen eingesetzt werden, um durch Bildung einer porösen Voranschwemmschicht auf dem eigentlichen Filtermedium und/oder durch Einbindung in das Filterkuchengerüst eine Abscheidung der Feststoffe bei gleichzeitig ausreichender Durchströmbarkeit des entstehenden Filterkuchens zu gewährleisten.

Als Filterhilfsmittel werden sowohl anorganische Substanzen wie beispielsweise Kieselgur oder Aluminiumoxide, als auch synthetische Polymere eingesetzt. Welche Filterhilfsmittel im Einzelnen verwandt werden, richtet sich auch nach dem Anwendungsgebiet. Bei der Filtration von Bier ist Kieselgur eines der hauptsächlich verwendeten Filterhilfsmittel.

Aus wirtschaftlichen Gründen ist es vorteilhafter, wenn das Filterhilfsmittel regenerierbar ist. Besonders vorteilhaft ist eine Regenerierung über mehrere Zyklen.

In der WO 02/32544 werden Co-Extrudate aus Polystyrol und wasserunlöslichem Polyvinylpyrrolidon und deren Verwendung als regenerierbare Filterhilfsmittel beschrieben, wobei jedoch die Regenerierbarkeit nur ganz allgemein erwähnt wird.

In der WO 03/084639 werden Co-Extrudate aus thermoplastischen Polymeren, außer Polystyrol, und wasserunlöslichem Polyvinylpyrrolidon und deren Verwendung als regenerierbare Filterhilfsmittel beschrieben, wobei jedoch die Regenerierbarkeit nur ganz allgemein erwähnt wird.

In der WO 92/11085 werden Filterhilfsmittel auf Basis von Agglomeraten aus vernetztem Polyvinylpyrrolidon und faserförmigen thermoplastischen Polymeren wie beispielsweise Polyethylenen oder Polyamiden und deren Verwendung als Filterhilfsmittel beschrieben. Es wird ganz allgemein darauf hingewiesen, dass die Filterhilfsmittel regenerierbar seien.

Aus der EP-A 611249 ist ein Verfahren zur Regenerierung eines Filterhilfsmittels durch Zusatz von Enzymen beschrieben. Konkret beschrieben ist lediglich die Behandlung von Kieselgur.

In der EP-A 253 233 ist die Regenerierung von Kieselgur mittels Natronlauge beschrieben.

In der DE 19625481 ist,die Regenerierung von Kieselgur in Gegenwart einer Mischung von nichtionischen Tensiden beschrieben.

In der DE 196 52 499 ist die Regenerierung von Filterhilfsmitteln aus Kieselgur beschrieben, wobei die Filterhilfsmittel zunächst mit Enzymlösungen behandelt werden und danach erst mit schwachen Alkalien, dann mit schwachen Säuren und zuletzt mit einem Oxidationsmittel behandelt werden.

In der WO 03/008067 ist die Regenerierung von Filterhilfsmitteln beschrieben, wobei am intakten Filterkuchen zunächst eine Spülung mit Lauge und anschliessend ebenfalls am intakten Filterkuchen eine Neutralisierung des pH-Werts durch Spülung mit Säure erfolgt. Aus der WO 96/3549 bzw. oder US 6117459 ist die Regenerierung von Filterhilfsmitteln aus synthetischen Polymeren durch Waschen mit Natronlauge und Waschen mit einer enzymatischen Verbindung bekannt, wobei die Behandlung in situ in der Filteranlage am intakten Filterkuchen erfolgt. Beschrieben ist dabei vor allem die Regenerierung eins Polyamid-Filterhilfsmittels.

Es hat sich jedoch gezeigt, dass die bisher bekannten Verfahren für die erfindungsgemäß zu behandelnden Filterhilfsmittel keine befriedigenden Ergebnisse liefern. Mit Hilfe dieser Verfahren ist keine erfolgreiche Regenerierung des Co-Extrudats über mehrere Zyklen möglich, und die guten Filtrationseigenschaften des frischen Filterhilfsmittels hinsichtlich Druckanstieg während der Filtration sowie der Filter- und Waschwiderstände im Regenerat bleiben nicht erhalten.

Üblicherweise werden Filterwiderstände und Waschwiderstände, die je nach technischem Anwendungsgebiet und Filterhilfsmittel einen bestimmten Wert übersteigen, in der Praxis als nicht akzeptabel angesehen, da ansonsten zu hohe Druckanstiegsraten während der Bierfiltration auftreten, was unwirtschaftlich kurze Filtrationszeiten zur Folge hat. Bei der Bierfiltration sollten beispielsweise die Filter- und Waschwiderstände für das erfindungsgemäß zu behandelnde Filterhilfsmittel einen Wert von 10 x 10¹² mPas/m² möglichst nicht übersteigen.

Als Filterwiderstand bezeichnet man das Produkt aus Fluidviskosität und Durchströmungswiderstand während des Filterkuchenaufbaus, als Waschwiderstand das Produkt aus Fluidviskosität und Durchströmungswiderstand bei der Durchströmung des bereits gebildeten Filterkuchens. Die Bestimmung der entsprechenden Messwerte ist dem Fachmann bekannt und ist in der VDI-Richtlinie 2762 ausführlich beschrieben.

Aufgabe der Erfindung war es, ein Verfahren zur Regenerierung des oben genannten Filterhilfsmittels zu finden, welches den mehrmaligen Einsatz des Filterhilfsmittels bei wirtschaftlichen Werten von Filtratdurchsatz und Filterstandzeit sowie ausreichender Klärwirkung ermöglicht sowie die Bereitstellung eines entsprechenden Regenerats. Zudem bestand das Problem, ein Verfahren zu finden, bei dem es nicht zum Abbau der polymeren Bestandteile kommt.

Demgemäß wurde ein Verfahren zur Regenerierung eines Filterhilfsmittels, welches ein Co-Extrudat aus einem wasserunlöslichen Polyvinylpyrrolidon und eines thermoplastischen Polymeren darstellt, durch Behandlung mit wässeriger Lauge und mit Enzymen gefunden, welches dadurch gekennzeichnet ist, dass man das Filterhilfsmittel zunächst einer Behandlung mit wässriger Lauge unterwirft, anschliessend eine Behandlung mit einer Enzymlösung vornimmt, daran anschliessend eine weitere Behandlung mit wässriger Lauge und eine Behandlung mit einem Tensid durchführt.

Das Verfahren wird vorzugsweise so durchgeführt, dass die Enzymbehandlung nicht in situ am intakten Filterkuchen durchgeführt wird, sondern dass der Filterkuchen unter Zerstörung des Partikelverbundes entfernt und ausserhalb der Filteranlage behandelt wird.

Als Filteranlage wird erfindungsgemäß der druckfeste Behälter und das darin befindliche Filterelement bezeichnet, in der die Filtration stattfindet. Als Filterelemente können alle dafür bekannten Vorrichtungen wie beispielsweise Filterkerzen oder Scheibenfilter vorhanden sein.

Das erfindungsgemäße Regenerierungsverfahren eignet sich wie beschrieben für Filterhilfsmittel, die als Co-Extrudate von wasserunlöslichem Polyvinylpyrrolidon und einem thermoplastischen Polymeren erhalten werden.

Als Co-Extrudate werden Mischungen von chemisch verschiedenen Polymeren bezeichnet, die durch gemeinsame Verarbeitung der Einzelkomponenten im Extruder erhalten werden, wobei die Co-Extrudate mit physikalischen Methoden nicht in die Einzelkomponenten zerlegt werden können. Im Falle der vorliegenden Erfindung bestehen die Co-Extrudate vorzugsweise aus einer thermoplastischen Polystyrol-Komponente und einem nicht-thermoplastischen wasserunlöslichen vernetzten Polyvinylpyrrolido. Bei der Co-Extrusion wird die Polyvinylpyrrolidon-Komponente in dem aufgeschmolzenen Thermoplasten dispergiert. Neben Polystyrol eignen sich als Thermoplasten beispielsweise Polyethylen, Polypropylen oder Polyamide.

Als Polystyrol-Komponente kommen alle gängigen Polystyrol-Typen in Betracht, wie Standard-Polystyrol, schlagzähmodifiziertes Polystyrol (SB-Typen) wie Copolymere aus Styrol und Butadien oder hochschlagzähmodifiziertes Polystyrol (HIPS-Typen), beispielsweise mit Polybutadien-Kautschuk oder Styrol-Butadien-Kautschuk modifziertes Polystyrol. Solche Polystyrole sind kommerziell erhältlich, beispielsweise als PS 158 k, PS 486 M oder Styrolux® (Fa. BASF) oder Empera 153F (Fa. Nova innovene) oder Edistir® N2987, Edistir ®N1782 (Fa. Polimeri Europa). Weiterhin kann anionisch polymerisiertes Polystyrol eingesetzt werden.

Erfindungsgemäß enthalten die Co-Extrudate neben der Polystyrol-Komponente als zweite Polymer-Komponente in Wasser unlösliche, bei Wasseraufnahme nicht gelbildende, vernetzte Polyvinylpyrrolidon-Polymerisate, die in der Literatur auch als sogenannte Popcorn-Polymere bezeichnet werden (Vgl. J.W. Breitenbach, Chimia, Vol. 21, S. 449-488, 1976). In den Pharmakopöen wie USP oder Ph.Eur. werden solche Polymerisate als Crospovidone bezeichnet. Solche Polymere weisen eine poröse Struktur auf und sind reich an Hohlräumen. Die Polymere sind wie gesagt auch bei Wasseraufnahme nicht gelbildend. Das Quellvolumen solcher Polymerisate in Wasser bei 20 °C liegt üblicherweise im Bereich von 2 bis 10 l/kg, vorzugsweise bei 4 bis 8 l/kg.
Solche crospovidone sind kommerziell erhältlich, beispielsweise als Divergan®-Typen der Fa. BASF oder als Polyplasdone®-Typen, Fa. ISP.

Die Co-Extrudate können 95 bis 20, vorzugsweise 75 bis 60 Gew.-% an Polystyrol und 5 bis 80, vorzugsweise 25 bis 40 Gew.-% Crospovidon, bezogen auf das Gesamtgewicht des Co-Extrudats, enthalten.

Die Herstellung der erfindungsgemäß zu behandelnden Co-Extrudate ist an sich bekannt und beispielweise in der WO 02/32544 oder der WO 03/084639 beschrieben.

Die Co-Extrudate werden für die Anwendung als Filterhilfsmittel üblicherweise durch Mahlprozesse auf mittlere Korngrössen von 20 bis 100 µm eingestellt. Es können auch Mischungen aus gemahlenen Co-Extrudaten mit unterschiedlichen Korngrössenverteilungen eingesetzt werden.

Als wasserunlösliches Polyvinylpyrrolidon kommt insbesondere ein vernetztes Homopolymer des N-Vinylpyrrolidons in Betracht, das auch als Crospovidon bezeichnet wird. Solche Produkte sind kommerziell erhältlich.

Als thermoplastische Polymere eignen sich beispielsweise Polystyrol-Typen, Polyamide, Polyolefine wie Polyethylen oder Polypropylen. Vorzugsweise wird als thermoplastisches Polymer Polystyrol eingesetzt.

Das erfindungsgemäße Verfahren wird so ausgeführt, dass das mit Verunreinigungen beladene Filterhilfsmittel zunächst einer Behandlung mit einer wässrigen Lauge unterworfen wird. Als wässrige Laugen eignen sich vor allem Natronlauge oder Kalilauge, besonders bevorzugt Natronlauge. Die Konzentration beträgt üblicherweise 0.5 bis 5 Gew.-% Feststoff Base/ l , insbesondere 1 bis 5 Gew.-%, besonders bevorzugt 2 bis 3.5 Gew.-%. Die Behandlungszeit richtet sich nach der Menge des zu behandelnden Filterhilfsmittels. Üblicherweise liegt die Behandlungszeit bei 15 bis 180 Minuten, bevorzugt 45 bis120 Minuten.

Im Anschluss an die Behandlung mit einer wässrigen Lauge erfolgt eine enzymatische Behandlung des Filterhilfsmittels. Es kann sich auch empfehlen, zwischen dem ersten Behandlungsschritt mit einer Lauge und der enzymatischen Behandlung einen Waschschritt mit kaltem oder heissem Wasser oder einer geeigneten Säure vorzunehmen. Geeignete Säuren sind mineralische Säuren wie beispielsweise Salzsäure, Salpetersäure oder Phosphorsäure oder auch organische Säuren wie Zitronensäure, Milchsäure und Kohlensäure. Gemäß einer bevorzugten Ausführungsform der Erfindung ist ein Waschschritt obligatorisch.

Vor der Behandlung mit einem Enzym wird der pH-Wert üblicherweise auf Werte < pH 7 eingestellt, vorzugsweise auf pH 3,5 bis 5,5.
Die Einstellung des pH-Werts kann beispielsweise mit Mineralsäuren wie Phosphorsäure, Salpetersäure, Schwefelsäure oder, im Falle von gläsernen Apparaturen, auch mit Salzsäure erfolgen. Weiterhin eignen sich Zitronensäure oder Milchsäure.

Grundsätzlich eignen sich als Enzyme Proteasen, Glucosidasen, Amylasen oder Pektinasen und alle weiteren Enzyme, die in der Lage sind, Hefezellen zu lysieren, oder auch Mischungen von Enzymen. Solche Enzyme bzw. Enzymmischungen sind kommerziell erhältlich.

Als Enzyme eignen sich bevorzugt Glucanasen, besonders bevorzugt β-1,3-Glucanasen. Neben einer β-Glucanase-Aktivität können auch weitere Enzymaktivitäten in der erfindungsgemäß verwendeten Enzymlösung vorhanden sein.

Die Enzyme kommen üblicherweise in Form wässriger Lösungen zur Anwendung.

Die geeignete Menge Enzym richtet sich nach der Aktivität des jeweiligen Enzyms und der Beladung des Unfiltrats und des Filterkuchens mit Verunreinigungen.
Die Ermittlung der Aktivität kann der Fachmann durch einige einfache Versuche vornehmen, indem er untersucht, welche Menge an Enzym er benötigt, um eine definierte Zahl von Hefezellen zu lysieren. Sodann kann die Dosierung in Abhängigkeit von der Trübung oder Beladung mit Hefezellen und des zu filtrierenden Volumens des Unfiltrats erfolgen.

Die Enzymbehandlung kann bei 25 - 80 °C, bevorzugt 35 - 60 °C, besonders bevorzugt 40 - 50 °C erfolgen. Die Dauer richtet sich nach der Menge an Filterhilfsmittel und Beladung mit Hefezellen. Üblicherweise beträgt die Dauer 30 bis 300 Minuten, bevorzugt 100 bis 180 Minuten.

Die Bestimmung von aktiven Einheiten kann wie im folgenden geschildert erfolgen: Eine aktive Einheit U (Units) ist erfindungsgemäß definiert als die Abnahme der Extinktion bei 800 nm um 0.04/min in einem Enzym-Assay bei pH 4,0 und 45 °C innerhalb der ersten 10 min. Als Substrat kann bei diesem Assay Brauereihefe mit 1-3x10⁷ Zellen/ml verwendet werden, die vorher mit Natronlauge behandelt wurde.

Bezogen auf den EBC-Wert des Unfiltrats bei 25 °C sowie das filtrierte Volumen und unter Bezug auf die wie oben beschriebenen aktiven Units empfiehlt sich eine Dosierung von 0.2 U/(EBC x hL) bis 12 U/(EBC x hL), vorzugsweise 1 bis 5 U/(EBC x hL).

### (EBC: European Brewery Convention; Standardtest zur Bestimmung der Trübungswerte .)

In Bezug auf die Hefezellzahl im zu regenerierenden Filterkuchen empfiehlt sich eine Dosierung von 3 bis 170 U/ 10¹⁰ Hefezellen, vorzugsweise 5 bis 85 U/ 10¹⁰ Hefezellen, insbesondere 5 bis 20 U/10¹⁰ Hefezellen.
Im Anschluss an die enzymatische Behandlung erfolgt ein zweiter Behandlungsschritt mit einer wässrigen Lauge unter den für den ersten Behandlungsschritt mit einer Lauge geschilderten Bedingungen. Zwischen enzymatischer Behandlung und der Laugenbe-handlung kann gewünschtenfalls wiederum ein Waschschritt mit kaltem oder heissem Wasser erfolgen.

Das Filterhilfsmittel wird auch mit einer wässrigen Tensidlösung oder Tensiddispersion behandelt werden. Die Konzentration an Tensid, bezogen auf das Gesamtgewicht der Lösung; kann 0.01 bis 4 Gew.-%, vorzugsweise 0.01 bis 1.5 Gew.-%, besonders bevorzugt 0.1 bis 0.75 Gew.-%, betragen. Als Tenside eignen sich sowohl anionische wie nichtionische Tenside. Es können auch Mischungen von Tensiden eingesetzt werden.

Geeignete ionische Tenside können sein: Fettalkoholsulfate wie Natriumdodecylsulfat oder Ammoniumdodecylsulfat, Fettalkoholethersulfate, Alkylsulfoacetate, Fettalkoholphosphorsäureester, Fettalkoholetherphosphate, Alkoholphosphorsäureester wie Triisobutylphosphat, Monoalkyl- oder Dialkylester der Sulfobernsteinsäure wie Dioctylnatriumsulfosuccinat, Alkylsulfonate, Alkylbenzolsulfonate wie Dodecylbenzolsulfonsäure.

Als nichtionische Tenside kommen in Betracht:
Fettalkoholethoxylate wie beispielsweise ein C₁₃-Fettalkohol mit 6 EO-Einheiten , Alkylphenolethoxylate, Polyoxyethylenfettsäureester, Polypropylenglykolethoxylate, Fettsäure- mono- und -diglyceride sowie die entsprechenden ethoxylate, Fettsäureglykolpartialester, Sorbitanfettsäureester oder Polyoxyethylensorbitanfettsäureester.

Die Behandlung mit dem Tensid kann gleichzeitig mit dem zweiten Behandlungsschritt mit wässriger Lauge erfolgen oder in einem nachgeschalteten Behandlungsschritt. Die Tensidbehandlung kann auch vor dem zweiten Behandlungsschritt mit wässriger Lauge erfolgen.

Die Behandlung mit wässrigem Tensid stellt eine bevorzugte Verfahrensvariante dar.

An diesen Behandlungsschritt kann sich ein weiterer Waschschritt mit kaltem oder heissen Wasser anschliessen.

Das erfindungsgemäße Verfahren wird gemäß einer Ausführungsform so durchgeführt, dass der Schritt der enzymatischen Behandlung nicht an einem intakten Filterkuchen bzw. einer Anschwemmschicht erfolgt, sondern in einer separaten Vorrichtung. Diese separate Vorrichtung kann beispielsweise ein Kessel oder jeder andere geeignete Behälter sein, und ist vorzugsweise mit einer Rührvorrichtung ausgestattet. Gegebenenfalls kann die Behandlung aber auch auf dem Filter erfolgen.

Der erste Behandlungsschritt mit wässriger Lauge kann gemäß einer Verfahrensvariante am intakten Filterkuchen erfolgen. Vor der enzymatischen Behandlung wird das Filterhilfsmittel dann unter Auflösung des Partikelverbands im Filterkuchen vom Filterelement entfernt, aus der Filtrationsanlage ausgebracht und in einer separaten Vorrichtung behandelt. Die enzymatische Behandlung erfolgt an einer wässrigen Suspension oder Aufschlämmung des Filterhilfsmittels, die üblicherweise einen Feststoffgehalt von 5 bis 25 Gew.-% aufweist.

Gemäß einer anderen Verfahrensvariante kann die erste Behandlung mit wässriger Lauge auch an einem aus der Filteranlage entfernten Filterkuchen, dessen Partikelverband disintegriert ist, und der als wässrige Aufschlämmung oder Suspension vorliegt, vorgenommen werden.

Nach der enzymatischen Behandlung kann der zweite Behandlungsschritt mit wässriger Lauge, gegebenenfalls in Anwesenheit von Tensiden, ebenfalls an der wässrigen Aufschlämmung oder Suspension des Filterhilfsmittels erfolgen. Gemäß einer Verfahrensvariante wird das Filterhilfsmittel jedoch vorher in einem geeigneten Filter angeschwemmt und der neu gebildete Filterkuchen den weiteren Behandlungsschritten unterzogen.

Die Regenerierungsschritte, die durch Durchströmung am intakten Filterkuchen vorgenommen werden, können bei sämtlichen Druckdifferenzen zwischen Zulauf- und Filtratseite des Filters durchgeführt werden, die einerseits eine Filterkuchendurchströmung ermöglichen und andererseits die Druckfestigkeit des Filtergehäuses nicht überschreiten. Üblicherweise liegt diese Druckdifferenz zwischen 1 kPA und 800 kPa.

Die enzymatische Behandlung, sowie gegebenenfalls der erste und/oder der zweite Behandlungsschritt mit einer Lauge sowie die Tensidbehandlung in der separaten Vorrichtung erfolgen üblicherweise bei Atmosphärendruck. Es ist auch denkbar, dass mindestens einer der Schritte bei Überdruck durchgeführt wird.

Die Temperatur der für die Regenerierung eingesetzten wässrigen Laugen ebenso wie der wässrigen Tenside kann 5 bis 95 °C, bevorzugt 45 bis 95 °C, betragen.

Das vollständig regenerierte Filterhilfsmittel kann in der Filteranlage verbleiben und sofort für die Filtration eingesetzt werden. Man kann das regenerierte Filterhilfsmittel jedoch auch aus der Anlage entfernen und nach Trocknung lagern.

Mit Hilfe des erfindungsgemäßen Verfahrens ist eine erfolgreiche Regenerierung des Co-Extrudats über mehrere Zyklen möglich, wobei die guten Filtrationseigenschaften des frischen Filterhilfsmittels hinsichtlich Druckanstieg während der Filtration sowie der Filter- und Waschwiderstände im Regenerat weitestgehend erhalten bleiben.

Der Fachmann kann je nach Biersorte und Hefefracht frisches Filterhilfsmittel zur Voranschwemmung oder Dosage zugeben.

Das erfindungsgemäße Verfahren eignet sich zur Regenerierung von Filterhilfsmitteln für jegliche Art von Anschwemmfiltern mit einer auf Filterelementen abgelagerten Anschwemmschicht.

Das erfindungsgemäße Regenerierungsverfahren eignet sich insbesondere für den Einsatz in der Bierfiltration.

Hauptbeurteilungsmerkmal der Regenerierung ist der zeitliche Druckanstieg (Druckdifferenz zwischen Zulauf- und Filtratseite des Filters) bei der auf die Regeneration folgenden Bierfiltration. Ein zu hoher Druckanstieg oder ein Anwachsen der Druckanstiegsrate von Versuch zu Versuch deuten auf eine unvollständige Regeneration des Filterhilfsmittels hin. Eine näherungsweise konstante Druckanstiegsrate von Versuch zu Versuch, die im Bereich derjenigen des Frischprodukts liegt, deutet auf eine vollständige Regeneration hin. Die Trübungsfracht im Unfiltrat schwankt üblicherweise und hat einen beträchtlichen Einfluss auf die Druckanstiegsrate. Dieser Einfluss kann näherungsweise durch Normierung der Druckdifferenz mit Hilfe der jeweiligen (ebenfalls auf einen Standardwert normierten) Unfiltrattrübung (25°-EBC) eliminiert werden. Die Berechnung des trübungsnormierten Drucks erfolgt dabei durch Division des gemessenen Drucks mit dem Quotienten aus der tatsächlichen Unfiltrattrübung und einer Standardtrübung von 30 EBC (25°-EBC).

Ein weiteres Beurteilungskriterium für den Regenerationserfolg ist der Filter- bzw. der Waschwiderstand des Regenerats. Sind diese Werte im Vergleich zum Frischprodukt signifikant erhöht und zeigen von Zyklus zu Zyklus einen Anstieg, ist ebenfalls von einer unvollständigen Regeneration auszugehen.

### Beispiele

In den nachfolgenden Beispielen wurde als Filterhilfsmittel ein Co-Extrudat aus 70 Gew.-% Polystyrol PS 158K und 30 Gew.-% Crospovidon, bezogen auf die Gesamtmenge an Co-Extrudat, verwendet. Es wurde eine Mischung aus zwei Mahlfraktionen mit mittleren Teilchengrößen D [0,5] 54 µm (45 Gew.-%) und D [0,5] 28 µm (55 Gew.-%) verwendet.

Für die Enzymbehandlung wurde eine wässrige Lösung einer 1,3-β-Glucanase (Trenolin Filtro DF, Fa. Erbslöh) verwendet.
Die Bierfiltration erfolgte mit Trübbier als Anschwemmfiltration mittels eines Pilotkerzenfilters (Spaltweite 70 µm, Filterfläche 0,032 m², Durchsatz 15 l/h).

Die Bestimmung der Filterwiderstände erfolgte gemäß der VDI-Richtlinie 2762.

### Beispiel 1 (Vergleichsbeispiel): Serienversuch mit 4 Filtrations-Regenerationszyklen; Beispiel für eine unvollständige Regeneration

### Regenerationsbedingungen

Zunächst wurde das Restbiervolumen in der Anlage mit kaltem Trinkwasser entfernt. Die Regeneration erfolgte durch 15 min Spülung mit Heißwasser (85°C), gefolgt von 15 min Spülung mit 3 Gew.-%iger wässriger NaOH (85°C), und einer erneuten Heißwasserspülung (15 min, 85°C). Sämtliche Spülungen wurden auf dem noch intakten Filterkuchen durchgeführt.

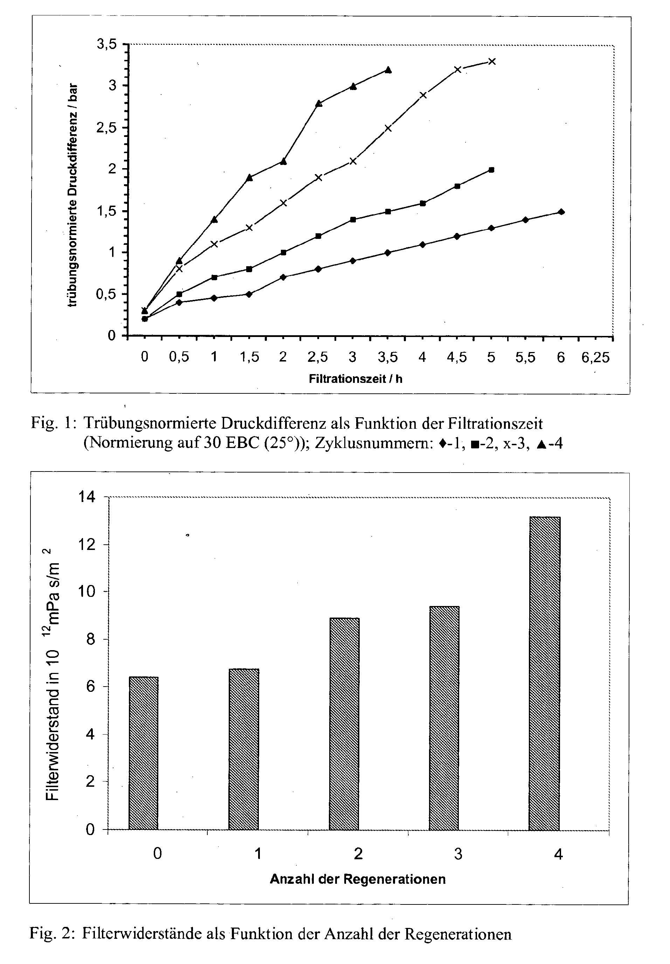

Druckanstiegskurven: (siehe Figur 1)
- Fig. 1:: Trübungsnormierte Druckdifferenz als Funktion der Filtrationszeit (Normierung auf 30 EBC (25°)); Zyklusnummern: ◆-1, ■-2, x-3, ▲-4

Es ist zu erkennen, dass der Gradient der Druckkurven von Zyklus zu Zyklus steigt und deutlich höhere Druckdifferenzen als im Falle des Frischprodukts gemessen werden.
Filterwiderstände der Regenerate: (siehe Figur 2)
- Fig. 2:: Filterwiderstände als Funktion der Anzahl der Regenerationen

Der Filterwiderstand des Regenerats nimmt nach jeder Regenerierung zu, was auf die Akkumulation von Biomasse im Regenerat hindeutet.

### Beispiel 2: Serienversuch mit 10 Filtrations-Regenerationszyklen, Beispiel für eine erfolgreiche Regeneration

### Regenerationsbedingungen

Nach Beendigung der Bierfiltration erfolgte ein Ausspülen des Restbiervolumens in der Anlage mit kaltem Trinkwasser. Anschliessend erfolgte eine Heißwasserspülung durch Spülung des noch auf dem Filter befindlichen intakten Filterkuchens mit Trinkwasser (85°C) während eines Zeitraums von 15 min., bei einem Durchsatz von 30 l/h. Anschliessend erfolgte eine Spülung des Filterkuchens mit wässriger 2 gew.-%iger NaOH ( 85°C) während eines Zeitraums von 10 min. unter Verwerfen der Spülflüssigkeit, anschliessend 50 min. lang ebenfalls mit wässriger NaOH in Kreislauffahrweise, in beiden Fällen bei einem Durchsatz von 15 l/h. Danach erfolgte eine Kaltwasserspülung zur Entfernung des Restvolumens der NaOH-Lösung in der Anlage und Abkühlung durch Spülung mit kaltem Trinkwasser (5-10°C), für 15 min, bei 30 /h Im Anschluss daran erfolgte eine Enzymbehandlung, wobei vor der Behandlung der Filterkuchen ausgebaut und in einen ausserhalb der Filteranlage befindlichen Rührkessel überführt wurde. Dort erfolgte eine Behandlung mit der wässrigen Lösung der β-1,3-Glucanase bei pH 5 und 47°C für 120 min. Die Enzymmenge betrug 10,9 U/EBC x hL.
Nach Beendigung der Enzymbehandlung wurde das Filterhilfsmittel über eine Dosiervorrichtung bei einem Durchsatz von 30 l/h erneut auf der Filterkerze angeschwemmt. Danach erfolgte eine Spülung des so erhaltenen Filterkuchens mit einer wässrigen Lösung, enthaltend NaOH und Na-Dodecylsulfat (SDS) (1 gew.-%ig NaOH, 2 gew.-%ig SDS), bei einer Temperatur der Spüllösung von 85°C, 15 min unter Verwerfen der Spülflüssigkeit, 10 min in Kreislauffahrweise, bei einem Durchsatz von 15 l/h. Daran schloss sich eine Heißwasserspülung des Filterkuchens mit Trinkwasser von 85°C, für 15 min an, bei einem Durchsatz von 30 l/h und danach eine Spülung mit kaltem Trinkwasser (5-10°C), für 15 min, bei 30 l/h.

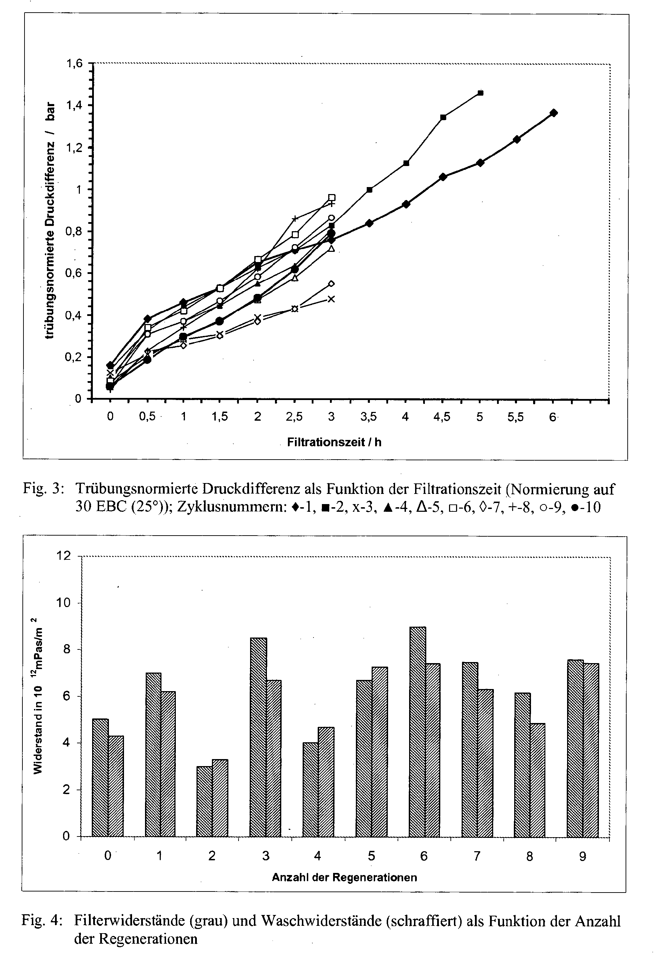

Die Druckanstiegskurven sind der Figur 3 zu entnehmen.
- Fig. 3:: Trübungsnormierte Druckdifferenz als Funktion der Filtrationszeit (Normierung auf 30 EBC (25°)); Zyklusnummern: ◆-1, ■-2, x-3, ▲-4, Δ-5, □-6, ◇-7, +-8, ○-9, ●-10

Die einzelnen Druckanstiegskurven liegen in einem Band um diejenige der Ausgangsfiltration mit Frischprodukt und zeigen keinen systematischen Anstieg des Gradienten. Filter- und Waschwiderstände der Regenerate:
Die Filter- und Waschwiderstände (siehe Figur 4) weisen zwar versuchsbedingte Schwankungen, jedoch keinen kontinuierlichen Anstieg auf.
- Fig. 4:: Filterwiderstände (grau) und Waschwiderstände (schraffiert) als Funktion der Anzahl der Regenerationen

### Beispiel 3: Serienversuch mit 11 Filtrations-Regenerationszyklen, zweites Beispiel für eine erfolgreiche Regeneration

### Regenerationsbedingungen

Die Regeneration erfolgte analog Beispiel 2, wobei aber die Enzymkonzentration je nach Zyklus 1,1 - 2,5 U/EBC x hL betrug.

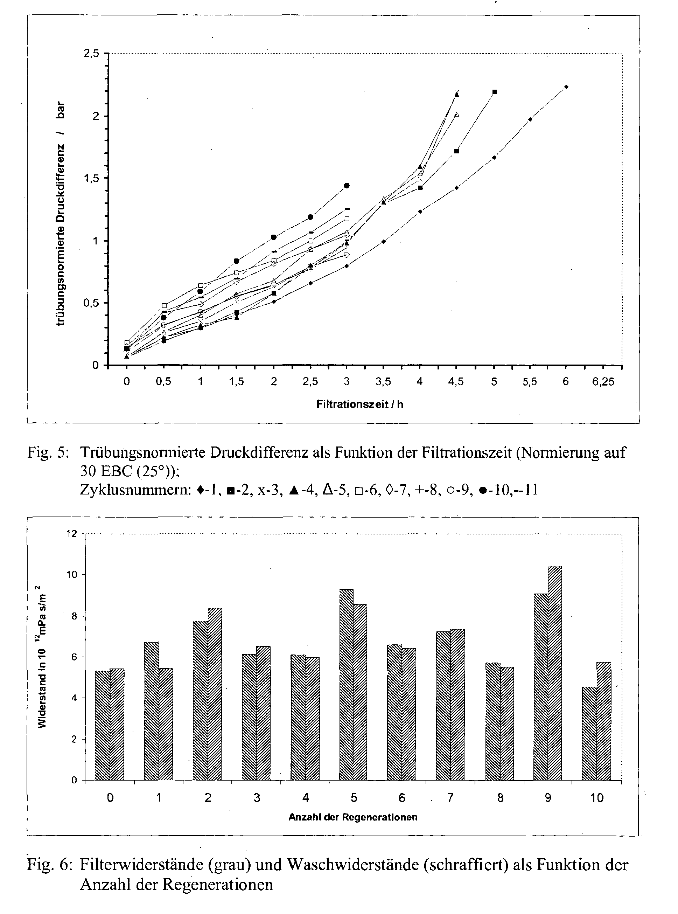

Die Druckanstiegskurven sind Figur 5 zu entnehmen.
- Fig. 5:: Trübungsnormierte Druckdifferenz als Funktion der Filtrationszeit (Normierung auf 30 EBC (25°)); Zyklusnummern: ◆-1, ■-2, x-3, ▲-4, Δ-5, □-6, ◇-7, +-8, ○-9, ●-10,--11

Wiederum ist zu erkennen, dass kein systematischer Anstieg bzgl. des Gradienten der Druckanstiegskurven vorliegt. Die Streuung der Versuchsdaten ist einerseits durch die unterschiedlichen Trübungen des Unfiltrats (die Normierung dämpft dies lediglich teilweise ab) und andererseits durch die unterschiedlichen eingesetzten Enzymmengen bedingt.
Filter- und Waschwiderstände der Regenerate
Die Filter- und Waschwiderstände (siehe Figur 6) zeigen z.T. Erhöhungen im Vergleich zum Frischprodukt, jedoch keinen kontinuierlichen Anstieg wie in Beispiel 1.
- Fig. 6:: Filterwiderstände (grau) und Waschwiderstände (schraffiert) als Funktion der Anzahl der Regenerationen

### Beispiel 4:

Die Versuchsführung erfolgte weitgehend analog zu Beispiel 2, jedoch mit folgenden Unterschieden:
Zu Beginn der Regeneration erfolgte eine Spülung mit wässriger Natronlauge während eines Zeitraums von 60 min, zunächst 15 min lang unter Verwerfen der Spülflüssigkeit, 45 min in Kreislauffahrweise.

Die verwendete Enzymmenge betrug 1,4 U/(EBC x hL).

Die Behandlung (Dauer: 25 min.) mit einer wässrigen Lösung, enthaltend 1 Gew.-% NaOH und 0.5 Gew.-% Na-Dodecylsulfat, wurde direkt nach der Enzymbehandlung außerhalb der Filteranlage im Rührkessel durchgeführt. Nach dieser Behandlung wurde das Material auf dem Filter angeschwemmt und der Filterkuchen 15 min. mit hei-βem Wasser (85 °C) und anschließend 15 min. mit Kaltwasser (5-10 °C) bei einem Durchsatz von 30 l/h durchströmt.

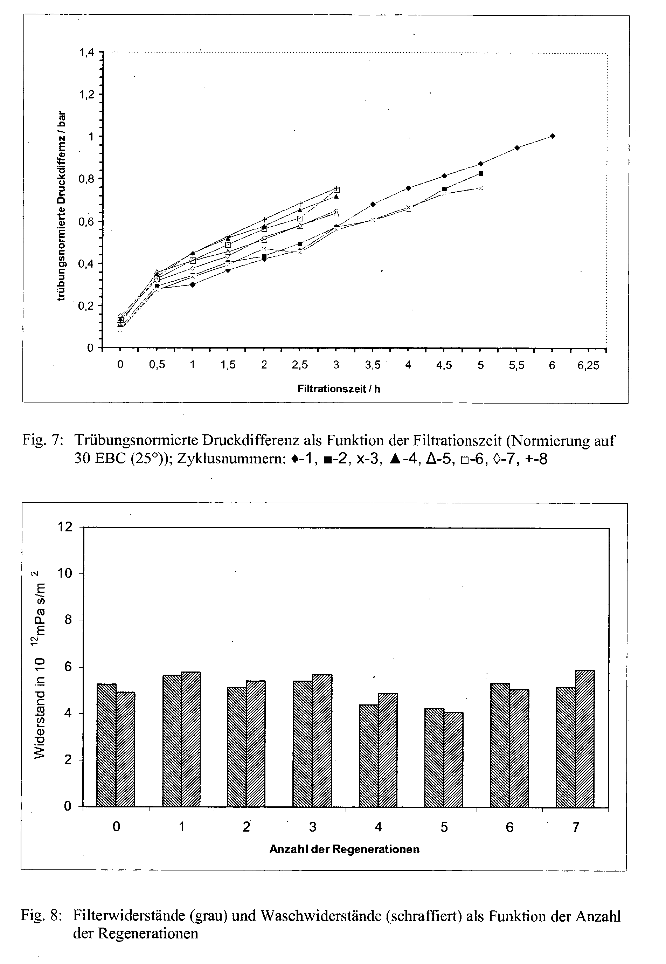

Der Druckverlauf der Filtration ist in Figur 7, die Filter- und Waschwiderstände sind in Figur 8 dargestellt.
- Fig. 7:: Trübungsnormierte Druckdifferenz als Funktion der Filtrationszeit (Normierung auf 30 EBC (25°)); Zyklusnummern: ◆-1, ■-2, x-3, ▲-4, Δ-5, □-6, ◇-7, +-8
- Fig. 8:: Filterwiderstände (grau) und Waschwiderstände (schraffiert) als Funktion der Anzahl der Regenerationen

Es liegt keine monotone Zunahme der Filter- und Waschwiderstände als Funktion der Zyklenzahl vor, was bedeutet, dass die Regeneration erfolgreich war.

## Patentansprüche

1. Verfahren zur Regenerierung eines Filterhilfsmittels, welches ein Co-Extrudat aus einem wasserunlöslichen Polyvinylpyrrolidon und einem Thermoplasten darstellt, durch Behandlung mit wässriger Lauge und mit Enzymen, **dadurch gekennzeichnet ist, dass** man das Filterhilfsmittel zunächst einer ersten Behandlung mit wässriger Lauge unterwirft, anschliessend eine Behandlung mit Enzymen vornimmt und daran anschliessend eine zweite Behandlung mit wässriger Lauge durchführt und man das Filterhilfsmittel mit einem Tensid behandelt.

2. Verfahren nach Anspruch 1, **dadurch gekennzeichnet, dass** als wässrige Lauge Natronlauge eingesetzt wird.

3. Verfahren nach einem der Ansprüche 1 bis 2, **dadurch gekennzeichnet, dass** als Enzyme Hefezellen lysierende Enzyme eingesetzt werden.

4. Verfahren nach einem der Ansprüche 1 bis 3, **dadurch gekennzeichnet, dass** als Enzyme Glucanasen eingesetzt werden.

5. Verfahren nach einem der Ansprüche 1 bis 4, **dadurch gekennzeichnet, dass** als Tenside anionische oder nicht-ionische Tenside eingesetzt werden.

6. Verfahren nach einem der Ansprüche 1 bis 5, **dadurch gekennzeichnet, dass** als Tensid Natriumdodecylsulfat verwendet wird.

7. Verfahren nach einem der Ansprüche 1 bis 6, **dadurch gekennzeichnet, dass** als Tenside Fettalkoholethoxylate verwendet werden.

8. Verfahren nach einem der Ansprüche 1 bis 7, **dadurch gekennzeichnet, dass** das Co-Extrudat als Thermoplast Polystyrol enthält.

9. Verfahren nach einem der Ansprüche 1 bis 8, **dadurch gekennzeichnet, dass** die Enzymbehandlung an einer wässrigen Aufschlämmung oder Suspension des Filterhilfsmittels erfolgt.

10. Verfahren nach einem der Ansprüche 1 bis 9, **dadurch gekennzeichnet, dass** die erste Behandlung mit wässriger Lauge an einem Filterkuchen erfolgt.

11. Verfahren nach einem der Ansprüche 1 bis 9, **dadurch gekennzeichnet, dass** die erste Behandlung mit wässriger Lauge an einer wässrigen Suspension oder Aufschlämmung des Filterhilfsmittels erfolgt.

12. Verfahren nach einem der Ansprüche 1 bis 11, **dadurch gekennzeichnet, dass** die zweite Behandlung mit wässriger Lauge an einer wässrigen Suspension oder Aufschlämmung des Filterhilfsmittels erfolgt.

13. Verfahren nach einem der Ansprüche 1 bis 11, **dadurch gekennzeichnet, dass** die zweite Behandlung mit wässriger Lauge an einem Filterkuchen erfolgt.

14. Verfahren nach einem der Ansprüche 1 bis 13, **dadurch gekennzeichnet, dass** die Behandlung mit dem Tensid gleichzeitig mit dem zweiten Behandlungsschritt mit wässriger Lauge erfolgt.

## Claims

1. A process for regenerating a filter aid which is a co-extrudate of a water-insoluble polyvinylpyrrolidone and a thermoplastic by treatment with aqueous alkali and enzymes, which comprises first subjecting the filter aid to a first treatment with aqueous alkali, subsequently performing a treatment with enzymes and subsequently thereto carrying out a second treatment with aqueous alkali and treating the filter aid with a surfactant.

2. The process according to claim 1, wherein, as aqueous alkali, use is made of sodium hydroxide solution.

3. The process according to any one of claims 1 to 2, wherein, as enzymes, use is made of enzymes lysing yeast cells.

4. The process according to any one of claims 1 to 3, wherein, as enzymes, use is made of glucanases.

5. The process according to any one of claims 1 to 4, wherein, as surfactants, use is made of anionic or nonionic surfactants.

6. The process according to any one of claims 1 to 5, wherein, as surfactant, use is made of sodium dodecyl sulfate.

7. The process according to any one of claims 1 to 6, wherein, as surfactants, use is made of fatty alcohol ethoxylates.

8. The process according to any one of claims 1 to 7, wherein the co-extrudate comprises polystyrene as thermoplastic.

9. The process according to any one of claims 1 to 8, wherein the enzyme treatment proceeds on an aqueous slurry or suspension of the filter aid.

10. The process according to any one of claims 1 to 9, wherein the first treatment with aqueous alkali is performed on a filter cake.

11. The process according to any one of claims 1 to 9, wherein the first treatment with aqueous alkali is performed on an aqueous suspension or slurry of the filter aid.

12. The process according to any one of claims 1 to 11, wherein the second treatment with aqueous alkali is performed on an aqueous suspension or slurry of the filter aid.

13. The process according to any one of claims 1 to 11, wherein the second treatment with aqueous alkali is performed on a filter cake.

14. The process according to any one of claims 1 to 13, wherein the treatment with the surfactant is performed at the same time as the second treatment step with aqueous alkali.

## Revendications

1. Procédé pour la régénération d'un adjuvant de filtration, qui est un produit coextrudé d'une polyvinylpyrrolidone insoluble dans l'eau et d'une résine thermoplastique, par traitement par une lessive aqueuse et des enzymes, **caractérisé en ce qu'**on soumet l'adjuvant de filtration d'abord à un premier traitement par une lessive aqueuse, on réalise ensuite un traitement par des enzymes, puis on réalise un deuxième traitement par une lessive aqueuse et on traite l'adjuvant de filtration par un agent tensioactif.

2. Procédé selon la revendication 1, **caractérisé en ce qu'**on utilise comme lessive aqueuse de la lessive de soude caustique.

3. Procédé selon l'une quelconque des revendications 1 à 2, **caractérisé en ce qu'**on utilise comme enzymes des enzymes lysant les cellules de levure.

4. Procédé selon l'une quelconque des revendications 1 à 3, **caractérisé en ce qu'**on utilise comme enzymes des glucanases.

5. Procédé selon l'une quelconque des revendications 1 à 4, **caractérisé en ce qu'**on utilise, comme agents tensioactifs, des agents tensioactifs anioniques ou non ioniques.

6. Procédé selon l'une quelconque des revendications 1 à 5, **caractérisé en ce qu'**on utilise comme agent tensioactif du dodécylsulfate de sodium.

7. Procédé selon l'une quelconque des revendications 1 à 6, **caractérisé en ce qu'**on utilise comme agents tensioactifs des éthoxylates d'alcools gras.

8. Procédé selon l'une quelconque des revendications 1 à 7, **caractérisé en ce que** le produit coextrudé contient du polystyrène comme résine thermoplastique.

9. Procédé selon l'une quelconque des revendications 1 à 8, **caractérisé en ce que** le traitement enzymatique a lieu sur une suspension aqueuse de l'adjuvant de filtration.

10. Procédé selon l'une quelconque des revendications 1 à 9, **caractérisé en ce que** le premier traitement est réalisé par une lessive aqueuse sur un gâteau de filtration.

11. Procédé selon l'une quelconque des revendications 1 à 9, **caractérisé en ce que** le premier traitement par une lessive aqueuse a lieu sur une suspension aqueuse de l'adjuvant de filtration.

12. Procédé selon l'une quelconque des revendications 1 à 11, **caractérisé en ce que** le deuxième traitement par une lessive aqueuse a lieu sur une suspension aqueuse de l'adjuvant de filtration.

13. Procédé selon l'une quelconque des revendications 1 à 11, **caractérisé en ce que** le deuxième traitement est réalisé par une lessive aqueuse sur un gâteau de filtration.

14. Procédé selon l'une quelconque des revendications 1 à 13, **caractérisé en ce que** le traitement par l'agent tensioactif a lieu en même temps que la deuxième étape de traitement par la lessive aqueuse.
